# FASCICULE DE BREVET EUROPEEN

(11) **EP 3 033 562 B1**
(45) Date de publication et mention de la délivrance du brevet: **19.07.2017**
(21) Numéro de dépôt: 14786953.1
(22) Date de dépôt: 11.08.2014
(51) Int. Cl.: F16L 41/06, F16L 55/18

(54) **DISPOSITIF DE CONFINEMENT POUR UNE INTERVENTION SUR UNE TUYAUTERIE ET PROCÉDÉ ASSOCIÉ**
EINDÄMMUNGSVORRICHTUNG FÜR ARBEITEN AN EINEM ROHR UND ZUGEHÖRIGES VERFAHREN
CONTAINMENT DEVICE FOR WORK CARRIED OUT ON A PIPE, AND ASSOCIATED METHOD

(30) Priorité: 12.08.2013 FR 1357964
(43) Date de publication de la demande: 22.06.2016
(73) Titulaire: Soletanche Freyssinet, 92500 Rueil Malmaison (FR)
(72) Inventeur: LACAMBRA, Germinal, F-13490 Jouques (FR)
(74) Mandataire: Cabinet Plasseraud
(86) Numéro de dépôt international: PCT/FR2014/052078
(87) Numéro de publication internationale: WO 2015/022467

(56) Documents cités:
- BE-A6- 1 011 257
- GB-A- 2 093 146
- US-A- 4 242 164
- US-A1- 2004 227 347

## Description

L'invention concerne les opérations de découpe et d'isolement de tuyauterie pouvant contenir un produit à risque pour l'environnement ou pour le personnel intervenant.

Pour intervenir sur une tuyauterie 2 contenant des produits toxiques ou contaminants, il est courant d'utiliser un dispositif de confinement qui, comme illustré sur la figure 1 ou décrit dans GB 2 093 146 A, présente une enceinte 110 réalisée par un film en matière plastique souple, par exemple en vinyle. L'étanchéité est assurée par du ruban adhésif 100. Le film plastique a un orifice pour permettre l'accès à la tuyauterie 2 à découper par un outil de coupe 3. Il présente un orifice 112 pour la collecte des effluents et éventuellement un orifice 113 pour la mise à l'air de l'enceinte 110 via un filtre 6. Selon une autre variante, l'outil de coupe est intégralement compris dans l'enveloppe et sa préhension est réalisée par déformation du film souple.

Ce dispositif de confinement est d'une mise en oeuvre peu commode. La préparation de l'intervention et la mise en place de l'enceinte 110 sont délicates et longues (plusieurs heures) du fait de sa souplesse. En pratique, le film doit être installé dans un sas et par une équipe de plusieurs opérateurs. L'intervention elle-même, dont la découpe du tuyau et l'isolement des tronçons du tuyau découpé, dure également plusieurs heures. Le risque de fuites existe et en cas de fuite, l'assainissement présente des risques et requiert à nouveau beaucoup de temps et génère des déchets supplémentaires. En outre, la paroi en vinyle constitue un déchet secondaire qu'il faut prendre en compte.

On connaît en outre de US 2004/227347 A1 la mise en place pour travail sur une conduite d'une bride d'outillage rigide présentant une paroi d'extrémité pourvue d'un orifice de section adaptée à la section de la tuyauterie et d'un accès latéral adapté pour un outil de coupe.

Un but de la présente invention est de proposer une nouvelle conception du dispositif de confinement qui réduit l'incidence des inconvénients qui précèdent.

Il est ainsi proposé un dispositif de confinement pour une intervention sur une tuyauterie. Le dispositif comprend une bride d'outillage rigide ayant une paroi d'extrémité pourvue d'un orifice de section adaptée à la section transversale extérieure de la tuyauterie, une ouverture plus large que l'orifice et située à l'opposé de la paroi d'extrémité, et un accès latéral pour un outil de coupe. Il comprend en outre un film souple pour former un volume étanche autour de la tuyauterie, avec une première extrémité du film fixée à l'ouverture de la bride d'outillage montée sur la tuyauterie et une deuxième extrémité du film raccordée à la tuyauterie.

Le dispositif de confinement présente ainsi une partie ayant une certaine tenue mécanique, facilitant la mise en place de l'enceinte étanche et la manipulation de l'outil de coupe. Les risques de contact entre la lame de l'outil de coupe et le film souple sont fortement réduits voire éliminés.

Un mode de réalisation du dispositif de confinement comprend en outre une deuxième bride rigide pour le raccordement du film souple à la tuyauterie. Cette deuxième bride a une paroi d'extrémité pourvue d'un orifice de section adaptée à la section transversale extérieure de la tuyauterie, et une ouverture plus large que l'orifice de la deuxième bride et située à l'opposé de la paroi d'extrémité de la deuxième bride. Le volume étanche est alors formé avec la deuxième extrémité du film souple fixée à l'ouverture de la deuxième bride montée sur la tuyauterie.

Dans ce mode de réalisation, il n'est plus nécessaire de fixer le film souple directement sur la tuyauterie. Il est fixé sur les ouvertures élargies des deux brides qui sont simplement montées sur la tuyauterie, leurs parois d'extrémités délimitant axialement le volume étanche où la tuyauterie sera ouverte lors de la découpe.

Le film souple peut présenter, dans un état déployé, une longueur supérieure à la distance le long de la tuyauterie entre l'ouverture de la bride d'outillage et l'accès latéral, augmentée de la distance entre les ouvertures respectives de la bride d'outillage et de la deuxième bride montées sur la tuyauterie. Une fois la tuyauterie coupée, on peut alors écarter axialement les deux morceaux sur lesquels sont montées les deux brides et sceller le film souple pour obturer les deux segments de tuyauterie. Un bouchon peut ensuite être rapporté sur les deux brides pour la suite des manipulations.

Un élément d'étanchéité, tel qu'un soufflet déformable ou un presse-étoupe, peut être disposé sur l'accès latéral de la bride d'outillage pour assurer une étanchéité autour de l'outil de coupe.

La bride d'outillage peut être conçue de façon à comprendre au moins une sortie pour collecter des effluents et/ou mettre à l'air le volume étanche.

Selon un autre aspect de l'invention, il est proposé un procédé de découpe et d'isolement d'une tuyauterie, comprenant :
monter une bride d'outillage rigide sur la tuyauterie, la bride d'outillage ayant une paroi d'extrémité pourvue d'un orifice de section adaptée à la section transversale extérieure de la tuyauterie, une ouverture plus large que l'orifice et située à l'opposé de la paroi d'extrémité, et un accès latéral pour un outil de coupe ;
mettre en place un film souple pour former un volume étanche autour de la tuyauterie, avec une première extrémité du film fixée à l'ouverture de la bride d'outillage et une deuxième extrémité du film raccordée à la tuyauterie ;
découper la tuyauterie au moyen de l'outil de coupe passant par l'accès latéral ;
séparer deux segments de la tuyauterie formés par la découpe ; et
sceller les extrémités des deux segments de tuyauterie.

Dans une mise en oeuvre du procédé, la mise en place du film souple comprend :
monter une deuxième bride rigide sur la tuyauterie, la deuxième bride ayant une paroi d'extrémité pourvue d'un orifice de section adaptée à la section transversale extérieure de la tuyauterie, une ouverture plus large que l'orifice et située à l'opposé de la paroi d'extrémité, les ouvertures de la bride d'outillage et de la deuxième bride étant placées l'une en face de l'autre ; et
fixer le film souple sur les ouvertures de la bride d'outillage et de la deuxième bride.

Dans une réalisation, la séparation des deux segments de la tuyauterie formés par la découpe consiste à écarter axialement les segments de la tuyauterie jusqu'à ce que l'extrémité du segment sur lequel la deuxième bride est montée sorte de l'ouverture de la bride d'outillage. Le scellement des extrémités des deux segments de tuyauterie consiste alors à souder le film souple sur lui-même dans l'intervalle entre l'ouverture de la bride d'outillage et l'extrémité du segment sur lequel la deuxième bride est montée. On peut ensuite poser des bouchons sur les ouvertures des deux brides fermées chacune par une partie du film soudé.

Dans une réalisation qui minimise la quantité de film souple à utiliser, la bride d'outillage et la deuxième bride sont montées sur la tuyauterie avec leurs ouvertures respectives placées l'une contre l'autre.

Lorsque la bride d'outillage est agencée en deux coquilles rigides ayant chacune une face de contact avec l'autre coquille, le montage de la bride d'outillage sur la tuyauterie peut comprendre le dépôt de colle sur au moins une des faces de contact des deux coquilles, l'assemblage et le serrage des deux coquilles sur la tuyauterie de façon que la colle maintienne les deux coquilles ensemble sur la tuyauterie en assurant la fermeture du volume étanche, en particulier autour de la tuyauterie au niveau de la paroi d'extrémité de la bride d'outillage.

Le procédé peut en outre comprendre, pendant et après la découpe de la tuyauterie, une récupération d'effluents par une sortie prévue sur la bride d'outillage, et/ou une mise à l'air du volume étanche par une sortie prévue sur la bride d'outillage et munie d'un filtre.

D'autres caractéristiques et avantages de l'invention ressortiront de la description qui en est faite ci-après, à titre indicatif et nullement limitatif, en référence aux dessins annexés, dans lesquels :

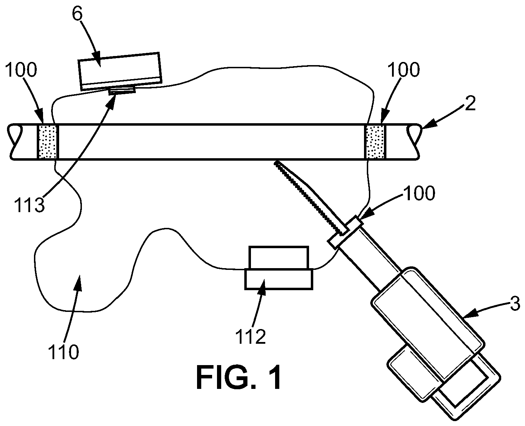

- la figure 1 représente un dispositif de confinement antérieurement utilisé ;
- les figures 2a et 2b sont des vues éclatée et assemblée d'une bride d'outillage selon un premier aspect de l'invention ;
- les figures 3a et 3b sont des vues éclatée et assemblée d'une deuxième bride selon un mode de réalisation du dispositif de confinement ;
- les figures 4a et 4b illustrent la fixation d'une bride d'outillage sur une tuyauterie ;
- les figures 5a et 5b illustrent la fixation d'une deuxième bride sur la tuyauterie ;
- la figure 6 illustre une position relative préférée des deux brides montées sur le tuyau avant de procéder à la découpe ;
- la figure 7 illustre la fixation aux deux brides d'une manchette formée d'un film de matière plastique souple ;
- les figures 8a et 8b illustrent la collecte des effluents et la mise à l'air de l'enceinte étanche selon un mode de réalisation du procédé ;
- la figure 9 illustre un premier stade de l'isolement de la tuyauterie découpée selon un mode de réalisation du procédé ;
- la figure 10 illustre un deuxième stade de l'isolement de la tuyauterie ; et
- les figures 11a et 11b sont des vues éclatée et assemblée d'une variante de bride utilisable selon l'invention.

Le dispositif de confinement 1 selon l'invention est destiné à permettre la découpe et l'isolement d'une tuyauterie 2 dans une manipulation étanche. À cette fin, le dispositif de confinement 1 est à fixer autour d'une tuyauterie 2 pour former une enceinte sensiblement étanche autour d'un tronçon de cette tuyauterie où la découpe aura lieu.

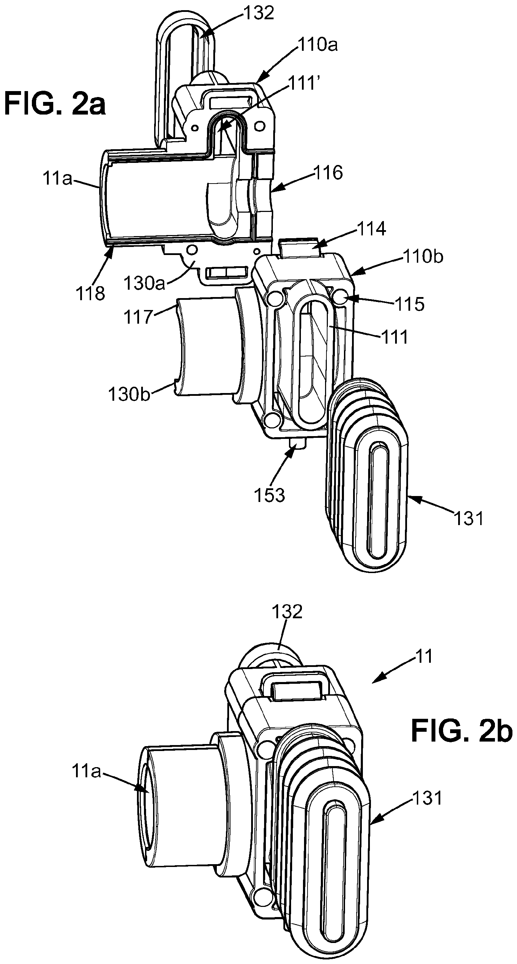

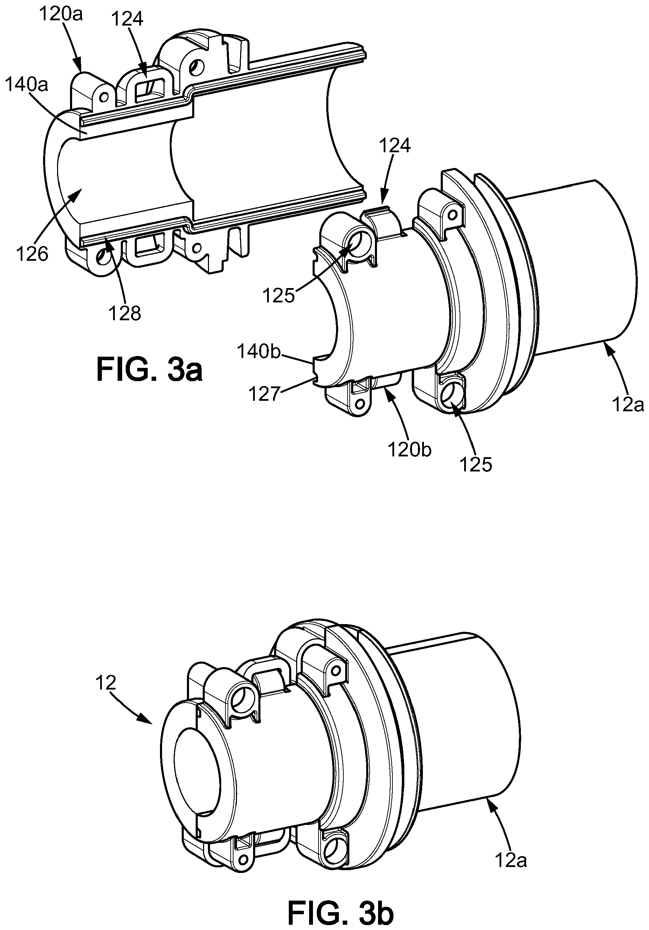

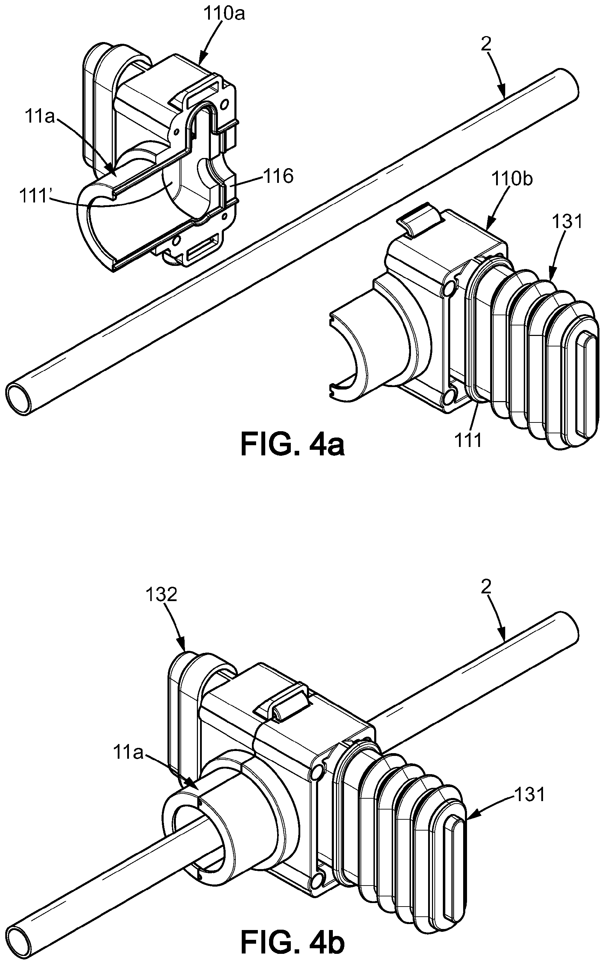

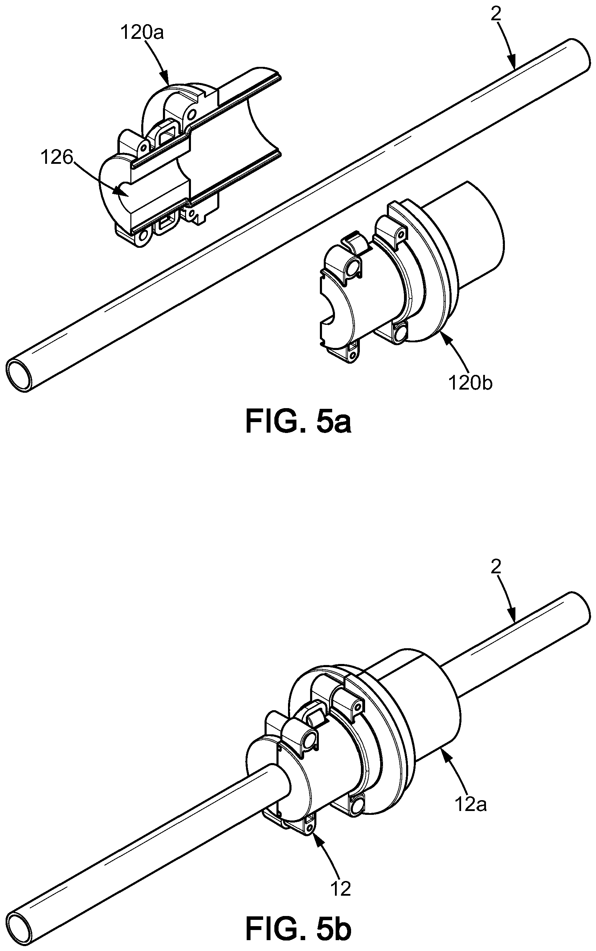

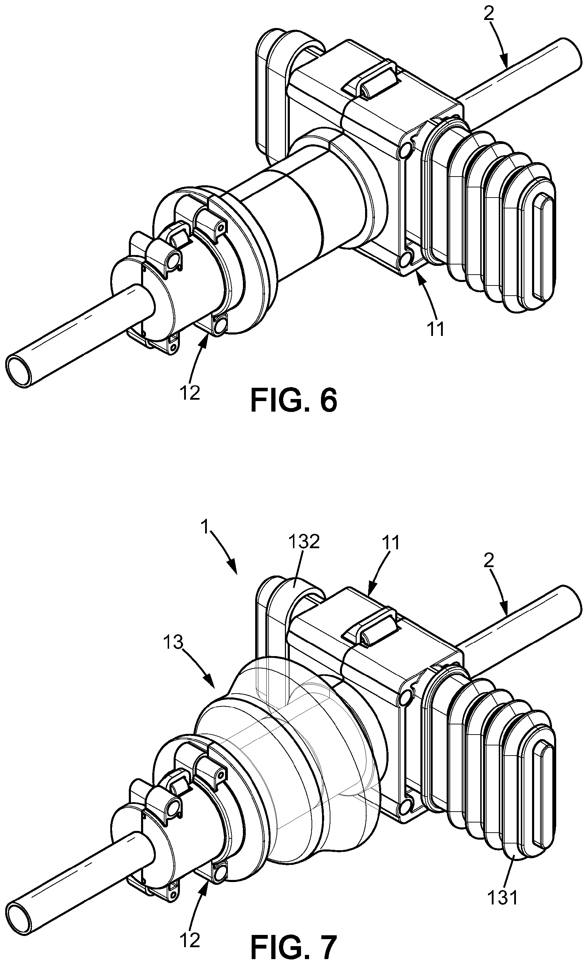

Un exemple de ce dispositif de confinement 1, assemblé sur une tuyauterie est visible sur les figures 7-9. Il se compose d'une première bride rigide 11, appelée ici bride d'outillage (figures 2 et 4), d'une deuxième bride rigide 12 (figures 3 et 5), et d'un film de matière plastique souple 13 en forme de manchette.

Comme illustré sur les figures 2a et 3a, chaque bride comprend une paroi d'extrémité 116, 126 qui présente un orifice de forme et de dimensions adaptées à la forme et aux dimensions de la tuyauterie 2. Un joint peut éventuellement être disposé pour contribuer à cette adaptation en forme et dimensions ainsi qu'à l'étanchéité de l'enceinte.

Les brides 11, 12 illustrées sur les figures 2 à 5 comprennent chacune deux coquilles 110a-b et 120a-b, respectivement, destinées à être assemblées entre elles autour d'une section transversale de tuyauterie.

Les deux coquilles 110a-b, 120a-b d'une bride 11, 12 comportent chacune une face de contact 130a-b, 140a-b, les deux faces de contact d'une bride venant se placer l'une contre l'autre lorsque la bride est assemblée sur la tuyauterie 2.

L'assemblage de chaque bride 11, 12 peut être temporairement assuré par des pattes de maintien provisoire 114, 124. Des passages 115, 125 pour des vis sont en outre prévus pour serrer l'une sur l'autre les deux coquilles de chaque bride. À cet effet, de deux à quatre vis de serrage correspondant à autant de passages 115, 125 par bride peuvent être prévues.

Pour assurer un positionnement précis entre les deux coquilles 110a-b, 120a-b d'une bride 11, 12 sur la tuyauterie 2, une nervure 118, 128 peut être formée sur la face de contact 130a, 140a de l'une des deux coquilles 110a, 120a de la bride pour coopérer avec une gorge complémentaire 117, 127 formée sur la face de contact 130b, 140b de l'autre coquille 110b, 120b de la bride.

Avant d'assembler les deux coquilles 110a-b, 120a-b d'une bride 11, 12 sur la tuyauterie 2, on dispose de la colle sur l'une au moins des faces de contact 130a-b, 140a-b de ces deux coquilles. Puis on réunit les deux coquilles sur la tuyauterie 2 (figures 2b et 3b) en les tenant à l'aide des pattes 124, et on serre l'ensemble au moyen des vis insérées dans les passages 115, 125.

Une fois la colle prise, l'assemblage est solidarisé et rendu étanche par la couche de colle entre les deux coquilles 110a-b, 120a-b et, au niveau de l'orifice de la paroi d'extrémité 116, 126, entre chaque coquille et la tuyauterie 2.

A l'opposé de sa paroi d'extrémité 116, 126, chaque bride 11, 12 comprend une ouverture 11a, 12a plus large que la tuyauterie 2, et donc plus large que les orifices formés dans les parois d'extrémité 116, 126.

La bride d'outillage 11 se distingue de la deuxième bride 12 en ce qu'elle comprend un accès latéral 111 pour un outil de coupe. Cet accès latéral 111 débouche dans une chambre délimitée par la bride d'outillage 11. Cette chambre comprend au moins une paroi qui s'étend à distance d'une portion longitudinale du tuyau 2 pour délimiter un espace autour de cette portion longitudinale du tuyau 2, cet espace étant ouvert du côté de l'ouverture 11 a de la bride 11. Dans l'exemple illustré par les figures, ladite au moins une paroi est une paroi cylindrique de diamètre intérieur supérieur au diamètre extérieur du tuyau 2 et de même axe de symétrie. L'invention n'est nullement limité à l'exemple illustré par les figures, et notamment toute forme de chambre, par exemple une chambre à quatre parois de forme parallélépipédique, et une certaine excentricité du tuyau par rapport à la chambre sont envisageables.

Les matériaux utilisés pour la fabrication des brides 11, 12 sont choisis pour résister aux attaques chimiques éventuelles du ou des produits à risque contenus dans la tuyauterie, en particulier aux d'acides (acide nitrique, etc.) et aux solvants (par exemples TPH, TBP et ses produits de dégradation).

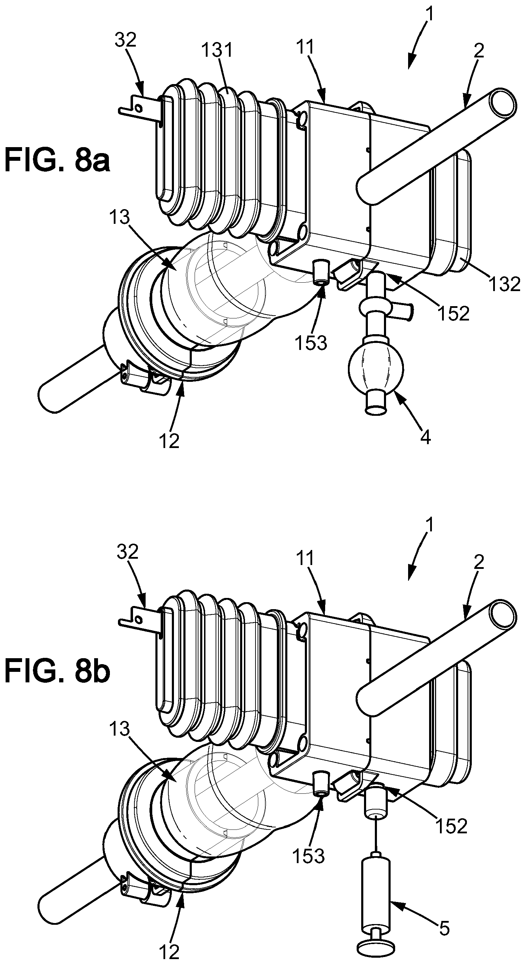

Tel qu'illustré par exemple sur la figure 8a, le film 13 en matière plastique souple, par exemple en vinyle, complète l'étanchéité du volume formé entre les brides 11, 12 autour de la tuyauterie 2.

Lors du montage des brides 11, 12 sur de la tuyauterie 2, leurs ouvertures respectives sont placées l'une en face de l'autre comme le montre la figure 6. Le film 13 a une extrémité fixée à l'ouverture 11a de la bride d'outillage 11 montée sur la tuyauterie et une extrémité opposée fixée à l'ouverture 12a de la deuxième bride 12 également montée sur la tuyauterie.

Lors de sa mise en place, le film plastique 13 est par exemple fixé au moyen de ruban adhésif sur des portions cylindriques des brides 11, 12 se terminant par les ouvertures 11 a, 12a. Il est d'autre part collé sur lui-même parallèlement à la tuyauterie, également au moyen de ruban adhésif, afin de se présenter sous la forme d'une manchette qui ferme le volume étanche entre les brides 11, 12 (figures 7-9).

Comme le montrent les figures 6 et 7, il est judicieux (quoique non obligatoire) que les brides 11, 12 soient montées sur la tuyauterie 2 avec leurs ouvertures respectives 11 a, 12a au contact l'une de l'autre.

La manchette formée par le film souple 13 est alors comprimée sur elle-même à la manière d'un soufflet comme le montre la figure 7.

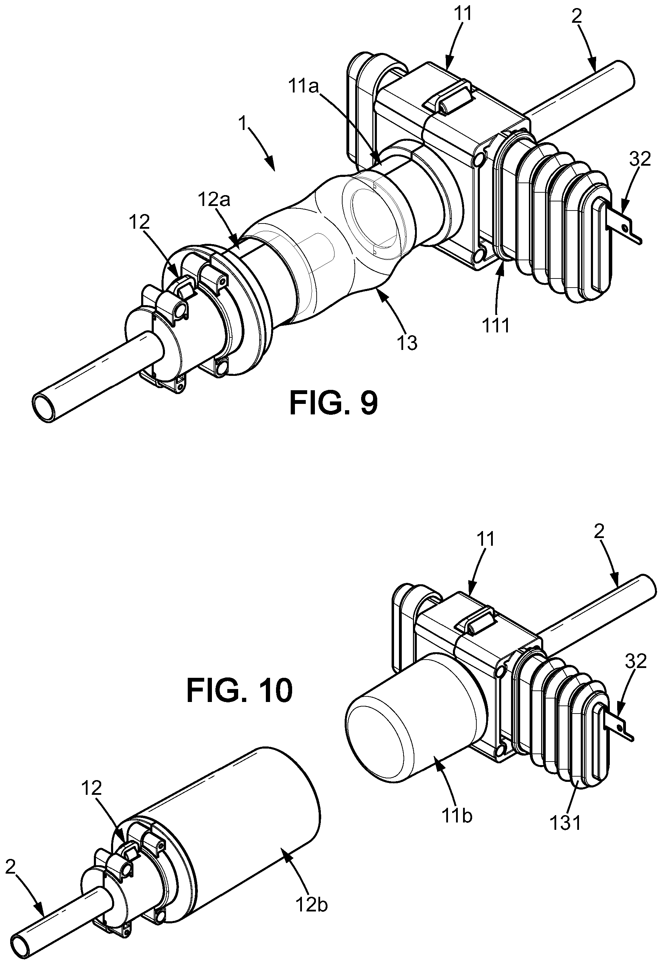

Ensuite, après découpe de la tuyauterie 2, les deux segments de tuyauterie qui ont été séparés sont écartés axialement l'un de l'autre en déployant la manchette auparavant comprimée. Le film 13 ainsi déployé est visible sur les figures 8 et 9.

La pose et la fixation des brides 11, 12 et du film 13 peut avantageusement être réalisée par un seul opérateur, le cas échéant équipé en tenue universelle, sans nécessairement avoir à installer un sas de confinement.

L'accès au tuyau 2 par l'outil de coupe est guidé par l'accès latéral 111. Celui-ci consiste en un orifice d'accès adapté à l'outil de coupe et pourvu d'un élément d'étanchéité 131. Dans le cas où l'outil de coupe utilise une lame de forme aplatie 32 à mouvement de va-et-vient longitudinal (figures 8-10), l'accès 111 se présente sous la forme d'un orifice oblong pour guider la lame dans un plan perpendiculaire à la tuyauterie 2. Le guidage permet une manipulation sécurisée, notamment en minimisant les risques de trouer accidentellement le film souple 13.

L'élément d'étanchéité 131 agencé sur l'accès latéral 111 de la bride 11 prend par exemple la forme d'un soufflet d'étanchéité. Le soufflet est par exemple en PVC et sa fixation est assurée à l'aide d'un adhésif.

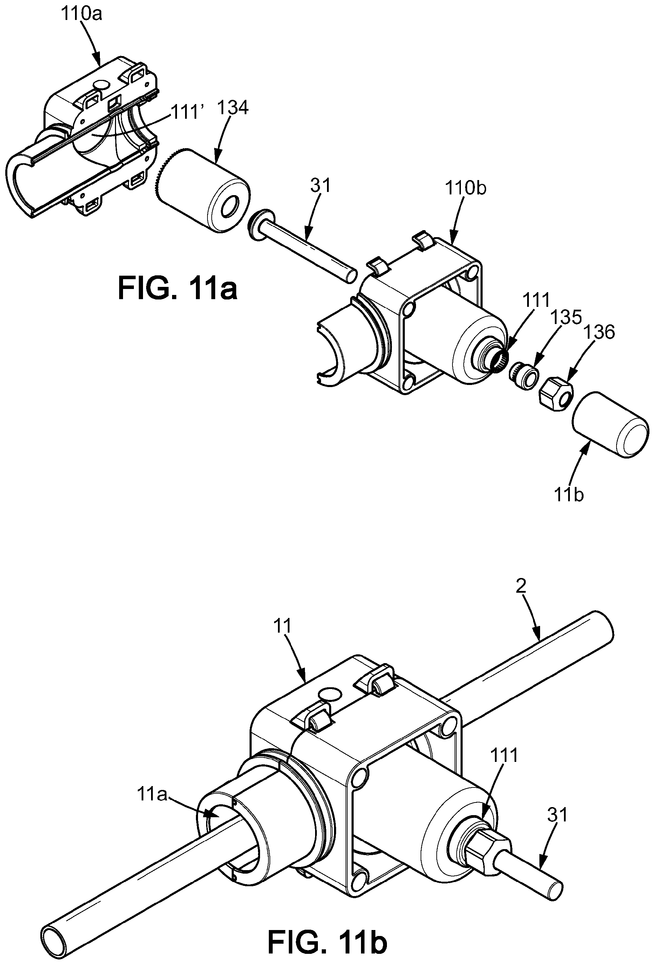

Les figures 11a-b illustrent un deuxième exemple où l'outil de coupe est une scie cloche. Dans ce cas, l'élément d'étanchéité peut être un presse-étoupe 135 monté sur la bride d'outillage 11. Selon ce deuxième exemple, un arbre de transmission 31 traverse le presse-étoupe 135 pour entraîner en rotation la lame cylindrique 134 de la scie cloche située dans un logement délimité par l'enveloppe extérieure de la demi-coquille 110b et formant une extension latérale de la chambre formée dans la bride d'outillage 11. Le presse-étoupe peut être serré au moyen d'un écrou 136 mettant en prise l'extrémité de l'arbre de transmission 31. La lame 134 restera dans la bride 11 après déconnexion entre l'arbre 31 et le moteur d'entraînement de la lame 134, pour constituer un déchet avec la bride 11 et le segment de tuyauterie 2 sur lequel elle est collée. Le fait que la coupe soit arrondie et qu'un morceau de tuyauterie reste logé dans la lame de scie cloche 134 ou la bride 11 ne constitue pas un inconvénient dans le cas d'une mise en déchet des segments de tuyauterie découpés.

Une option intéressante est de munir la bride d'outillage 11 de deux accès latéraux diamétralement opposés, repérés par les références 111 et 111' sur les figures 2a, 4a et 11a. L'un de ces deux accès sera, en service, fermé hermétiquement par un bouchon 132, tandis que l'autre recevra l'élément d'étanchéité 131 ou 135 et la lame 32, 134 de l'outil de coupe. Cette disposition permet un choix entre une découpe par le côté gauche et une découpe par le côté droit selon ce qui est le plus commode pour l'opérateur compte tenu des éléments extérieurs pouvant gêner la manipulation. Éventuellement, plus que deux accès latéraux peuvent être répartis angulairement sur la bride d'outillage 11 autour de l'axe de la tuyauterie 2.

Comme représenté sur les figures 8a et 8b, la bride d'outillage 11 peut en outre comprendre un orifice 152 de collecte d'effluents. Une poire à pipeter 4 (vanne à trois voies) ou une seringue 5 peut alors être raccordée à l'orifice de collecte 152. L'orifice de collecte 152 est préférentiellement disposé pour être situé en partie basse de la bride d'outillage 11 lorsque celle-ci est fixée au tuyau 2.

Comme représenté sur les figures 2a, 8a et 8b, la bride 11 peut en outre comprendre un orifice de mise à l'air 153 pouvant recevoir un filtre (non représenté).

Un robinet peut être placé sur chaque orifice 152, 153 afin de contrôler la collecte des effluents et la mise à l'air.

Comme on le comprend en observant les figures 7 à 9, la longueur de la manchette constituée du film 13 est de préférence supérieure, par exemple d'une dizaine de centimètres environ, à la distance entre l'ouverture 11a de la bride d'outillage 11 et la position longitudinale de l'accès latéral 111, lorsque les deux ouvertures 11a, 12a des brides 11, 12 sont mises en contact lors de leur fixation. La longueur minimale de film 13 doit être augmentée de la distance longitudinale entre les ouvertures 11 a, 12a des brides 11, 12, si celles-ci sont fixées à la tuyauterie 2 avec un intervalle entre elles.

Après avoir découpé la tuyauterie et séparé axialement les deux segments de tuyauterie qui en résultent en déployant le film plastique 13 (figure 9), et après avoir récupéré les effluents et/ou mis à l'air le volume étanche, un outil de scellement est inséré dans l'intervalle entre les deux segments de tuyauterie pour souder le film plastique 13 sur lui-même. La soudure du film 13 est réalisé de peut façon sensiblement perpendiculaire au tuyau et peut consister en une soudure relativement étendue sur une portion longitudinale du film ou en deux lignes de soudure séparées entre elles par une portion longitudinale du film.

La soudure du film 13 isole les deux segments qui ont été découpés. Le film 13 est alors coupé perpendiculairement à la tuyauterie, soit entre les deux lignes de soudure, soit le long de la soudure étendue, en ayant soin de laisser la soudure fermée hermétiquement de chaque côté.

Pour protéger les ouvertures 11a, 12a des brides fermées par les deux parties soudées du film 13, des bouchons 11 b, 12b sont alors placés sur ces ouvertures (figure 10). L'étanchéité de l'ensemble peut en outre être assurée par le collage des bouchons.

On note que la quantité de vinyle (ou autre plastique) à utiliser pour joindre les deux brides à l'aide d'un film souple peut rester limitée. Il suffit d'avoir la place, une fois le film déployé, d'écarter les segments de tuyauterie découpés, de pincer le film sur lui-même et de pratiquer une soudure suffisamment large pour qu'elle puisse ensuite être coupée.

L'invention n'est pas limitée aux modes de réalisation présentés ci-dessus à titre d'illustration. Diverses variantes sont possibles. L'une d'entre elles, par exemple, consiste à ne prévoir une bride rigide que du côté de l'outil de coupe, le film vinyle étant collé directement sur la tuyauterie avec du ruban adhésif de l'autre côté du volume étanche.

## Revendications

1. Dispositif de confinement (1) pour une intervention sur une tuyauterie (2), le dispositif comprenant :
une bride d'outillage rigide (11) ayant une paroi d'extrémité (116) pourvue d'un orifice de section adaptée à la section transversale extérieure de la tuyauterie, une ouverture (11a) plus large que l'orifice et située à l'opposé de la paroi d'extrémité (116), et un accès latéral (111) pour un outil de coupe ; et
un film souple (13) pour former un volume étanche autour de la tuyauterie, avec une première extrémité du film fixée à ladite ouverture de la bride d'outillage montée sur la tuyauterie et une deuxième extrémité du film raccordée à la tuyauterie.

2. Dispositif selon la revendication 1, comprenant en outre une deuxième bride rigide (12) pour le raccordement du film souple (13) à la tuyauterie (2), la deuxième bride ayant une paroi d'extrémité (126) pourvue d'un orifice de section adaptée à la section transversale extérieure de la tuyauterie, et une ouverture (12a) plus large que l'orifice de la deuxième bride et située à l'opposé de la paroi d'extrémité de la deuxième bride, le volume étanche étant formé avec la deuxième extrémité du film souple fixée à ladite ouverture de la deuxième bride montée sur la tuyauterie.

3. Dispositif selon la revendication 2, dans lequel le film souple (13) présente, dans un état déployé, une longueur supérieure à la distance le long de la tuyauterie entre l'ouverture (11 a) de la bride d'outillage (11) et l'accès latéral (111), augmentée de la distance entre les ouvertures respectives (11 a, 12a) de la bride d'outillage et de la deuxième bride montées sur la tuyauterie.

4. Dispositif selon l'une quelconque des revendications précédentes, comprenant en outre un élément d'étanchéité (131, 135) disposé sur l'accès latéral (111) de la bride d'outillage (11) pour assurer une étanchéité autour de l'outil de coupe.

5. Dispositif selon l'une quelconque des revendications précédentes, dans lequel la bride d'outillage (11) comprend au moins une sortie (152) pour collecter des effluents et/ou mettre à l'air le volume étanche.

6. Procédé de découpe et d'isolement d'une tuyauterie, le procédé comprenant :
monter une bride d'outillage rigide (11) sur la tuyauterie, la bride d'outillage ayant une paroi d'extrémité (116) pourvue d'un orifice de section adaptée à la section transversale extérieure de la tuyauterie, une ouverture (11a) plus large que l'orifice située à l'opposé de la paroi d'extrémité, et un accès latéral (111) pour un outil de coupe ;
mettre en place un film souple (13) pour former un volume étanche autour de la tuyauterie, avec une première extrémité du film fixée à ladite ouverture de la bride d'outillage et une deuxième extrémité du film raccordée à la tuyauterie ;
découper la tuyauterie au moyen de l'outil de coupe passant par l'accès latéral ;
séparer deux segments de la tuyauterie formés par la découpe ; et
sceller les extrémités des deux segments de tuyauterie.

7. Procédé selon la revendication 6, dans lequel la mise en place du film souple (13) comprend :
monter une deuxième bride rigide (12) sur la tuyauterie, la deuxième bride ayant une paroi d'extrémité (126) pourvue d'un orifice de section adaptée à la section transversale extérieure de la tuyauterie, une ouverture (12a) plus large que l'orifice et située à l'opposé de la paroi d'extrémité, les ouvertures (11a, 12a) de la bride d'outillage (11) et de la deuxième bride (12) étant placées l'une en face de l'autre ; et
fixer le film souple sur les ouvertures de la bride d'outillage et de la deuxième bride.

8. Procédé selon la revendication 7, dans lequel la séparation des deux segments de la tuyauterie formés par la découpe consiste à écarter axialement les segments de la tuyauterie jusqu'à ce que l'extrémité du segment sur lequel la deuxième bride est montée sorte de l'ouverture de la bride d'outillage (11), et dans lequel le scellement des extrémités des deux segments de tuyauterie consiste à souder le film souple (13) sur lui-même dans l'intervalle entre l'ouverture (11a) de la bride d'outillage et l'extrémité du segment sur lequel la deuxième bride (12) est montée.

9. Procédé selon la revendication 8, dans lequel des bouchons (11 b, 12b) sont respectivement posés sur les ouvertures des deux brides fermées chacune par une partie du film soudé.

10. Procédé selon l'une quelconque des revendications 7 à 9, dans lequel la bride d'outillage (11) et la deuxième bride (12) sont montées sur la tuyauterie (2) avec leurs ouvertures (11a, 12a) respectives placées l'une contre l'autre.

11. Procédé selon l'une quelconque des revendications 6 à 10, dans lequel la bride d'outillage (11) comprend deux coquilles rigides (110a-b) ayant chacune une face de contact avec l'autre coquille, et dans lequel le montage de la bride d'outillage sur la tuyauterie (2) comprend :
déposer de la colle sur au moins une des faces de contact des deux coquilles ; et
assembler et serrer les deux coquilles sur la tuyauterie de façon que la colle maintienne les deux coquilles ensemble sur la tuyauterie en assurant la fermeture du volume étanche, en particulier autour de la tuyauterie au niveau de la paroi d'extrémité de la bride d'outillage.

12. Procédé selon l'une quelconque des revendications 6 à 11, comprenant en outre, pendant et après la découpe de la tuyauterie, une récupération d'effluents par une sortie (152) prévue sur la bride d'outillage.

13. Procédé selon l'une quelconque des revendications 6 à 12, comprenant en outre, pendant et après la découpe de la tuyauterie, une mise à l'air du volume étanche par une sortie (153) prévue sur la bride d'outillage et munie d'un filtre.

## Patentansprüche

1. Eindämmungsvorrichtung (1) für Arbeiten an einem Rohr (2), wobei die Vorrichtung aufweist:
einen starren Werkzeugflansch (11) aufweisend eine Endwand (116) mit einem Durchgangsloch, dessen Querschnitt passend zu dem Außenquerschnitt des Rohrs ist, eine Öffnung (11a), die größer als das Durchgangsloch ist und auf der gegenüberliegenden Seite der Endwand (116) angeordnet ist, und einen seitlichen Zugang (111) für ein Schneidwerkzeug; und
eine flexible Folie (13), um ein dichtes Volumen um das Rohr herum zu bilden, wobei ein erstes Ende der Folie an der Öffnung des an dem Rohr angebrachten Werkzeugflansches befestigt ist und ein zweites Ende der Folie mit dem Rohr verbunden ist.

2. Vorrichtung nach Anspruch 1, ferner mit einem zweiten starren Flansch (12) für das Verbinden der flexiblen Folie (13) mit dem Rohr (2), wobei der zweite Flansch aufweist: eine Endwand (126) mit einem Durchgangsloch, dessen Querschnitt passend zu dem Außenquerschnitt des Rohrs ist, und eine Öffnung (12a), die größer als das Durchgangsloch des zweiten Flansches ist und auf der gegenüberliegenden Seite der Endwand des zweiten Flansches angeordnet ist, wobei das dichte Volumen mit dem zweiten Ende der flexiblen Folie gebildet wird, das an der Öffnung des an dem Rohr angebrachten zweiten Flansches befestigt ist.

3. Vorrichtung nach Anspruch 2, in welcher die flexible Folie (13) in einem entfalteten Zustand eine Länge hat, die größer ist als der Abstand entlang des Rohrs zwischen der Öffnung (11a) des Werkzeugflansches (11) und dem seitlichen Zugang (111), erhöht um den Abstand zwischen den jeweiligen Öffnungen (11a, 12a) des Werkzeugflansches und des zweiten Flansches in ihrem an dem Rohr angebrachten Zustand.

4. Vorrichtung nach einem der vorstehenden Ansprüche, aufweisend ferner ein an dem seitlichen Zugang (111) des Werkzeugflansches (11) angeordnetes Dichtungselement (131, 135) zur Sicherstellung einer Dichtheit um das Schneidwerkzeug herum.

5. Vorrichtung nach einem der vorstehenden Ansprüche, in welcher der Werkzeugflansch (11) mindestens einen Auslass (152) zum Sammeln von Flüssigkeiten und/oder Belüften des dichten Volumens aufweist.

6. Verfahren zum Schneiden und Isolieren eines Rohrs, wobei das Verfahren aufweist:
Anbringen eines starren Werkzeugflansches (11) an dem Rohr, wobei der Werkzeugflansch aufweist: eine Endwand mit einem Durchgangsloch, dessen Querschnitt passend zu dem Außenquerschnitt des Rohrs ist, eine Öffnung (11a), die größer als das Durchgangsloch ist und auf der gegenüberliegenden Seite der Endwand angeordnet ist, und einen seitlichen Zugang (111) für ein Schneidwerkzeug;
Anordnen einer flexiblen Folie (13), um ein dichtes Volumen um das Rohr herum zu bilden, wobei ein erstes Ende der Folie an der Öffnung des Werkzeugflansches befestigt wird und ein zweites Ende der Folie mit dem Rohr verbunden wird;
Schneiden des Rohrs mit Hilfe eines Schneidwerkzeugs, das durch den seitlichen Zugang zugeführt wird;
Trennen von zwei durch das Schneiden gebildeten Segmenten des Rohrs; und
Versiegeln der Enden der zwei Rohrsegmente.

7. Verfahren nach Anspruch 6, in welchem das Anordnen der flexiblen Folie (13) aufweist:
Anbringen eines zweiten starren Flansches (12) an dem Rohr, wobei der zweite Flansch aufweist: eine Endwand (126) mit einem Durchgangsloch, dessen Querschnitt passend zu dem Außenquerschnitt des Rohrs ist, und eine Öffnung (12a), die größer als das Durchgangsloch ist und auf der gegenüberliegenden Seite der Endwand angeordnet ist, wobei die Öffnungen (11a, 12a) des Werkzeugflansches (11) und des zweiten Flansches (12) einander gegenüberliegend angeordnet werden; und
Befestigen der flexiblen Folie an den Öffnungen des Werkzeugflansches und des zweiten Flansches.

8. Verfahren nach Anspruch 7, in welchem das Trennen der durch das Schneiden gebildeten zwei Segmente des Rohrs darin besteht, axial die Segmente des Rohrs voneinander weg zu bewegen, bis das Ende des Segments, an welchem der zweite Flansch angebracht ist, aus der Öffnung des Werkzeugflansches (11) austritt, und in welchem das Versiegeln der Enden der zwei Segmente des Rohrs darin besteht, in dem Zwischenraum zwischen der Öffnung (11a) des Werkzeugflansches und dem Ende des Segments, an welchem der zweite Flansch (12) angebracht ist, die flexible Folie (13) auf sich selbst zu verschweißen.

9. Verfahren nach Anspruch 8, in welchem Stopfen (11b, 12b) jeweils auf den jeweils mit einem Teil der geschweißten Folie geschlossenen Öffnungen der zwei Flansche angeordnet werden.

10. Verfahren nach einem der Ansprüche 7 bis 9, in welchem der Werkzeugflansch (11) und der zweite Flansch (12) an dem Rohr (2) angebracht werden, derart, dass ihre jeweiligen Öffnungen (11a, 12a) aneinander liegend sind.

11. Verfahren nach einem der Ansprüche 6 bis 10, in welchem der Werkzeugflansch (11) zwei starre Schalen (110a-b) aufweist, deren jede eine Kontaktfläche mit der anderen Schale hat, und in welchem das Anbringen des Werkzeugflansches an dem Rohr (2) aufweist:
Auftragen von Klebstoff auf mindestens eine der Kontaktflächen der zwei Schalen; und
Aneinandersetzen und Aneinanderpressen der zwei Schalen an dem Rohr, derart, dass der Klebstoff die zwei Schalen an dem Rohr fest zusammenhält und dabei sicherstellt, dass das dichte Volumen insbesondere um das Rohr im Bereich der Endwand des Werkzeugflansches verschlossen ist.

12. Verfahren nach einem der Ansprüche 6 bis 11, ferner aufweisend während oder nach dem Schneiden des Rohrs ein Sammeln von Flüssigkeiten über einen an dem Werkzeugflansch bereitgestellten Auslass (152).

13. Verfahren nach einem der Ansprüche 6 bis 12, ferner aufweisend während oder nach dem Schneiden des Rohrs ein Belüften des dichten Volumens (153) über einen Auslass (153), der an dem Werkzeugflansch bereitgestellt ist und mit einem Filter ausgestattet ist.

## Claims

1. Containment device (1) for work carried out on a pipe (2), the device comprising:
a rigid tool flange (11) having an end wall (116) provided with an orifice with a section adapted to the external cross section of the pipe, an opening (11a) wider than the orifice and located opposite the end wall (116), and a side access (111) for a cutting tool; and
a flexible film (13) for forming a leak tight volume around the pipe, with a first end of the film fixed to said opening of the tool flange mounted on the pipe and a second end of the film connected to the pipe.

2. Device according to claim 1, further comprising a second rigid flange (12) for connecting the flexible film (13) to the pipe (2), the second flange having an end wall (126) provided with an orifice with a section adapted to the external cross section of the pipe, and an opening (12a) wider than the orifice of the second flange and located opposite the end wall of the second flange, whereby the leak tight volume is formed with the second end of the flexible film fixed to said opening of the second flange mounted on the pipe.

3. Device according to claim 2, wherein the flexible film (13) has, in a deployed state, a length greater than the distance along the pipe between the opening (11a) of the tool flange (11) and the side access (111), increased by the distance between the respective openings (11a, 12a) of the tool flange and of the second flange mounted on the pipe.

4. Device according to any of the previous claims, further comprising a sealing element (131, 135) arranged on the side access (111) of the tool flange (11) in order to provide a leak tight seal around the cutting tool.

5. Device according to any of the previous claims, wherein the tool flange (11) comprises at least one outlet (152) in order to collect effluents and/or vent the leak tight volume.

6. Method for cutting and isolating a pipe, the method comprising:
mounting a rigid tool flange (11) on the pipe, the tool flange having an end wall (116) provided with an orifice with a section adapted to the external cross section of the pipe, an opening (11a) wider than the orifice located opposite the end wall, and a side access (111) for a cutting tool;
positioning a flexible film (13) for forming a leak tight volume around the pipe, with a first end of the film fixed to said opening of the tool flange and a second end of the film connected to the pipe;
cutting the pipe using the cutting tool passing through the side access;
separating two segments of the pipe formed by the cutting; and
sealing the ends of the two pipe segments.

7. Method according to claim 6, wherein the positioning of the flexible film (13) comprises:
mounting a second rigid flange (12) on the pipe, the second flange having an end wall (126) provided with an orifice with a section adapted to the external cross section of the pipe, an opening (12a) wider than the orifice and located opposite the end wall, the openings (11a, 12a) of the tool flange (11) and of the second flange (12) being placed facing one another; and
fixing the flexible film on the openings of the tool flange and of the second flange.

8. Method according to claim 7, wherein the separation of the two segments of the pipe formed by the cutting consists in axially moving the segments of the pipe away from each other until the end of the segment whereon the second flange is mounted exits from the opening of the tool flange (11), and wherein the sealing of the ends of the two pipe segments consists in welding the flexible film (13) onto itself in the interval between the opening (11a) of the tool flange and the end of the segment whereon the second flange (12) is mounted.

9. Method according to claim 8, wherein plugs (11b, 12b) are respectively placed on the openings of the two flanges, each of which is closed by a portion of the welded film.

10. Method according to any of claims 7 to 9, wherein the tool flange (11) and the second flange (12) are mounted on the pipe (2) with the respective openings (11a, 12a) thereof placed against one another.

11. Method according to any of claims 6 to 10, wherein the tool flange (11) comprises two rigid shells (110a-b), each having a contact surface with the other shell, and wherein the mounting of the tool flange on the pipe (2) includes:
depositing glue on at least one of the contact surfaces of the two shells; and
assembling and clamping the two shells onto the pipe such that the glue holds the two shells together on the pipe by closing the leak tight volume, in particular around the pipe at the level of the end wall of the tool flange.

12. Method according to any of claims 6 to 11, further comprising, during and after the cutting of the pipe, a recovery of effluents via an outlet (152) provided on the tool flange.

13. Method according to any of claims 6 to 12, further comprising, during and after the cutting of the pipe, a venting of the leak tight volume via an outlet (153) provided on the tool flange and fitted with a filter.
